# EUROPEAN PATENT APPLICATION

(11) **EP 4 134 263 A1**
(43) Date of publication of application: **15.02.2023**
(21) Application number: 21306116.1
(22) Date of filing: 12.08.2021
(51) Int. Cl.: B60L 53/122, B60L 53/126, B60L 53/38, H02J 50/40, H02J 50/90, B60L 53/30, B60L 53/66

(54) **CHARAGING APPARATUS AND METHOD FOR INDUCTIVE CHARGING OF VEHICLE BATTERIES**

(71) Applicant: EnerSys Delaware Inc., Reading, PA 19605 (US)
(72) Inventor: MÉTIVET, Nicolas, 80600 Doullens (FR); HOMBERT, Antoine, 62128 Croisilles (FR); ZOURAQ, Brahim Azzabi, 62000 Arras (FR); DEHEM, Patrick, 62490 Vitry-en-Artois (FR)
(74) Representative: Abel & Imray LLP

(57) **Abstract**

Charging apparatus and method for transferring energy signals via inductive coupling to an on-board coil of an electric vehicle. A charging apparatus (110, 810) includes a power transfer coil (111, 811); a plurality of alignment coils (813) and a controller (130, 817), configured to: detect a presence of the vehicle in a proximity of the charging apparatus; detect signals received by each of the plurality of alignment coils (813); and determine whether the vehicle is aligned or is not aligned relative to the power transfer coil (111, 811) based on the signals received by each of the plurality of alignment coils (813).

## Description

### TECHNICAL FIELD

The present disclosure relates to the electric charging of vehicles, and in particular, to methods, systems, and devices for charging vehicle batteries using inductive charging.

### BACKGROUND

Batteries have become increasingly important, with a variety of industrial, commercial, and consumer applications. Of particular interest are power applications involving "deep discharge" duty cycles, such as motive power applications. The term "deep discharge" refers to the extent to which a battery is discharged during service before being recharged. By way of counter example, a shallow discharge application is one such as starting an automobile engine wherein the extent of discharge for each use is relatively small compared to the total battery capacity.

There is significant and increasing interest in consumer and commercial electric vehicles (EVs) that are propelled using electric motors supplied with power from "deep discharge" electric batteries. Examples of EVs include, but are not limited to, cars, vans, trucks, tractor units for semi-trailer trucks, sport utility vehicles (SUVs), airborne vehicles, and seaborne vehicles. Additional motive power applications that require deep discharge capability include Class 1 electric rider trucks, Class 2 electric narrow aisle trucks and Class 3 electric hand trucks. Purchasing trends and consumer surveys suggest that EVs may account for over 20% of the global vehicle market by 2030, with even higher adoption rates in some regions and countries.

The electric batteries in EVs are typically lithium-ion and lithium polymer, which offer high energy density compared to their weight. Other types of rechargeable batteries used in EVs include lead-based batteries and nickel-based batteries, as examples.

Many currently available EVs are charged using a plug or other wired connector. For example, some EVs can be coupled to standard electrical sockets via a supply cable, and an on-vehicle converter may convert alternating current (AC) grid power supplied from the socket into direct current (DC) power to charge the battery. Some EVs may be charged using an external charger that converts the AC grid power into the DC battery supply power. These chargers may integrate a large AC-to-DC converter capable of supplying a higher amount of power (e.g., a higher voltage and/or current), reducing charging times. Various proprietary and open standards for implementing charging stations and charging cables are available or are being developed to increase the available infrastructure for charging EVs.

Some drawbacks of plug-in charging of EVs stems from the use of relatively thick cables, which may include a relatively large amount of conductive material to deliver the higher voltages and charges, as well as a relatively large amount of insulating material (e.g., cable jacket) to protect the user from electrical shock. These cables can be bulky or difficult to manipulate for some users, and may also be a source of electrical losses. Despite the safety protections, possible electrical shock to a user may result from using these cables. Insertion and removal of the connector may result in mechanical wear, which may necessitate frequent repair and/or replacement of the cable.

### SUMMARY

Aspects of the present disclosure provides methods, systems, and devices that may be used in transferring energy to a vehicle, such as an electric vehicle.

According to some aspects, a charging apparatus configured to transfer energy via inductive coupling to an on-board coil of a vehicle may be provided, the charging apparatus comprising a plurality of power transfer coils; and a controller, configured to: detect a presence of the vehicle in a proximity of the charging apparatus; identify a power transfer coil from the plurality of power transfer coils to activate based on a position of the vehicle relative to the charging apparatus; and activate the identified power transfer coil.

The controller may be configured to identify an power transfer coil from the plurality of power transfer coils to activate based on an activation of each power transfer coil of the plurality of power transfer coils of the charging apparatus in a sequence and based on feedback indicating characteristics of an energy transfer resulting from the activation of each power transfer coil in the sequence.

The charging apparatus may include a plurality of sets of alignment coils, each set of alignment coils associated with a respective one of the plurality of power transfer coils, and the controller may be configured to identify a power transfer coil from the plurality of power transfer coils to activate based on a detection of alignment signals by each of the alignment coils.

The controller may be configured to detect the presence of the vehicle in the proximity of the charging apparatus based on a signal received from a positioning device.

The controller may be configured to detect the presence of the vehicle in the proximity of the charging apparatus based on a signal received from a component of the vehicle. The signal received from the component of the vehicle may be a signal acknowledging an identification signal transmitted by the charging apparatus.

A center of each of the plurality of power transfer coils may be offset from a center of a housing of the charging apparatus. A housing of the charging apparatus is or resembles a parking bumper.

According to some aspects, a charging apparatus configured to transfer energy via inductive coupling to an on-board coil of a vehicle may be provided. The charging apparatus may include an power transfer coil; a plurality of alignment coils; and a controller, configured to: detect a presence of the vehicle in a proximity of the charging apparatus; detect signals received by each of the plurality of alignment coils; and determine whether the vehicle is aligned or is not aligned relative to the power transfer coil based on the signals received by each of the plurality of alignment coils.

The controller may be configured to detect the presence of the vehicle in the proximity of the charging apparatus based on a signal received from a component of the vehicle. The signal received from the component of the vehicle may be a signal acknowledging an identification signal transmitted by the charging apparatus.

In some embodiments and aspects, the plurality of alignment coils may include at least five alignment coils. The controller may be configured to determine whether the vehicle is aligned or is not aligned relative to the power transfer coil in a first axis, and the controller may be configured to determine whether the vehicle is aligned or is not aligned relative to the power transfer coil in a second axis.

The controller may be configured to determine whether the vehicle is aligned or is not aligned relative to the power transfer coil in one or more horizontal axes, and the controller may be configured to determine whether an airgap between the vehicle and the power transfer coil is present in a vertical axis.

In some embodiments and aspects, the power transfer coil is a first power transfer coil of a plurality of power transfer coils, the plurality of alignment coils is a first plurality of alignment coils of multiple pluralities of alignment coils, each of the plurality of alignment coils associated with a respective one of the plurality of power transfer coils, and the controller is configured to identify a power transfer coil from the plurality of power transfer coils to activate based on a detection of alignment signals by each of the alignment coils of the multiple pluralities of alignment coils.

According to some aspects, a charging apparatus may include a power transfer coil configured to transfer energy to an on-board coil of a vehicle via a resonant signal; a data reception coil configured to receive a communication signal from a coil of the vehicle and the resonant signal from the power transfer coil; and a data reception signal processing circuit configured to separate the communication signal from the resonant signal and provide the separated communication signal to a controller.

In some embodiments and aspects, the data reception signal processing circuit comprises a band-pass filter, an envelope filter, and a low-pass filter.

In some embodiments and aspects, the data reception signal processing circuit is configured to convert the communication signal from an analog signal to a digital signal.

In some embodiments and aspects, the controller is configured to transmit a message to the on-board coil of the vehicle via a signal emission coil.

### BRIEF DESCRIPTION OF THE FIGURES

The accompanying drawings, which are incorporated in and constitute a part of the specification, illustrate embodiments of the inventive concepts and, together with the description, serve to explain principles of the inventive concepts.
**FIGS. 1A-C** illustrate example EV charging systems that uses inductive charging, according to some aspects of the present disclosure.
**FIGS. 2A-B** illustrate aspects of misalignment and airgap problems in inductive charging systems.
**FIGS. 3A-B** illustrate some components of a charging apparatus that may be used in EV charging systems, according to some aspects of the present disclosure.
**FIGS. 4A-B** illustrate examples of transferring energy despite a misalignment and/or airgap between components of inductive charging systems that include the charging apparatus of **FIGS. 3A-B****,** according to some aspects of the present disclosure.
**FIGS. 5A-B** illustrate example EV charging systems that uses inductive charging, according to some aspects of the present disclosure.
**FIGS. 6-7** are flowcharts illustrate operations within a method of charging an EV using the charging apparatus of **FIGS. 3A-B****,** according to some aspects of the present disclosure.
**FIGS. 8A** and **8B** illustrate some components of charging apparatuses that may be used in EV charging systems, according to some aspects of the present disclosure.
**FIGS. 9-10** are block diagrams to describe in greater detail some of the components of the charging apparatuses of **FIGS. 8A** and **8B****,** according to some aspects of the present disclosure.
**FIGS. 11A-B** illustrate examples of detecting misalignments and/or airgaps in inductive charging systems that include the charging apparatus of **FIGS. 8A** and **8B****,** according to some aspects of the present disclosure.
**FIG. 12** is a flowchart illustrating operations within a method of charging an EV using the charging apparatus of **FIGS. 8A** and **8B****,** according to some aspects of the present disclosure.
**FIG. 13** illustrates a charging apparatus that may be used in EV charging systems, according to some aspects of the present disclosure.
**FIG. 14** is a flowchart illustrating operations within a method of charging an EV using the charging apparatus of **FIG. 13****,** according to some aspects of the present disclosure.
**FIGS. 15A-15B** are flowcharts illustrate operations within a method of charging an EV using the charging apparatuses of **FIGS. 3A-B****,** **FIG. 8A****,** or **FIG. 13****,** according to some aspects of the present disclosure.
**FIG. 16** is a block diagram illustrating aspects of a computing device that may be used or implemented according to aspects of the present disclosure.

### DETAILED DESCRIPTION

In addition to the plug-in charging discussed above, inductive wireless charging technologies are also being considered and developed for EVs. Inductive wireless charging may address some of the problems discussed above with respect to charging cables. Inductive charging uses electromagnetic fields to transfer energy through inductive coupling from an off-board source (e.g., a charger station or pad) to an on-board destination (e.g., a charging circuit on the vehicle). This inductive coupling may be resonant inductive coupling, which may result in more efficient power transfer.

In inductive charging, AC may pass through a primary coil present in the off-board charging station or pad. This alternating current creates a fluctuating magnetic field as it moves through the primary coil, which in turn induces an alternating electric current in an on-board (secondary) induction coil. The on-board AC can then be passed through a rectifier to convert it to DC, which is then used to charge the on-board battery. The off-board source may be referred to herein interchangeably as an off-board coil, a primary coil, or a sender coil, and the on-board destination may be referred to herein interchangeably as an on-board coil, a secondary coil, or a receiver coil.

In EVs equipped with an inductive charger, the plug-in cord may no longer be required. To initiate charging, the EV may be placed or parked relatively close to the off-board source. Although inductive charging technology provides some advantageous benefits over plug-in charging, misalignment of the off-board coil and on-board coil or an airgap therebetween may result in a considerable reduction of the efficiency of the charge.

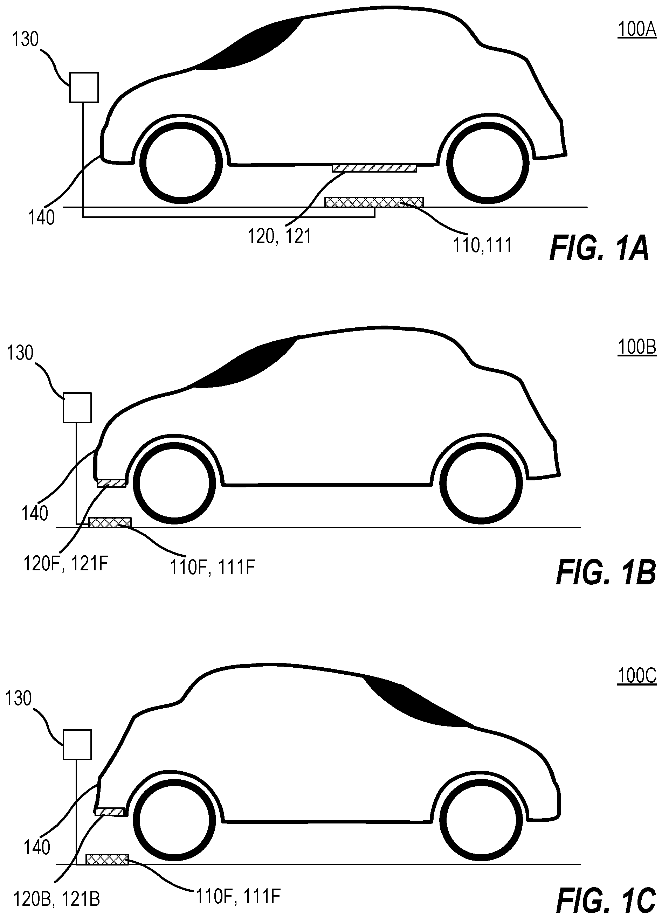

**FIG. 1A** illustrates one example EV charging system **100A** that uses inductive charging. An EV **140** may be equipped with an on-board inductive charging system **120** that includes an on-board coil **121** on the underside or ground-facing side of the EV **140.** The on-board coil **121** may be positioned on the underside or ground-facing side of the EV **140** between the front and rear wheels of the EV **140,** and/or at a central portion of the EV **140.** The on-board inductive charging system **120** and the on-board coil **121** thereof may be coupled to additional circuitry and/or to a battery not shown in the figure.

An off-board inductive charging system **110** may be installed at a parking location at which the EV **140** can be placed or parked. An example parking location may be a parking spot, garage stall, designated charging area, or the like. The off-board inductive charging system **110** includes an off-board coil **111,** which may be installed on or in a floor or ground of the parking location. The off-board coil **111** may be positioned in a central portion of the parking location such that it will be aligned with the on-board coil **121** positioned on the underside or ground-facing side of the EV **140.** The off-board inductive charging system **110** and the off-board coil **111** thereof may be coupled to circuitry and/or to the main grid or other energy source not shown in the figure.

A controller **130** is also present in the EV charging system **100A** and may be used by a user to initiate charging of the EV **140** (i.e., initiate a transfer of energy through inductive coupling of the off-board coil **111** and the on-board coil **121**) and perform other actions with respect to the EV charging system **100A.** For example, the controller **130** may be used to provide payment information as part of purchasing charging services of the EV **140,** subscriber information as part of indicating a user or subscriber of charging services of the EV **140,** or other information that may be used to facilitate charging of the EV **140.** Although the controller **130** is shown as a component of the EV charging system **100A** that is separate from the off-board inductive charging system **110,** in some embodiments the controller **130** may be integrated into the off-board inductive charging system **110.** In some embodiments, the controller **130** may communicate (e.g., via radio frequency (RF) signals) with the EV **140** or an electronic device associated with the EV **140,** such as a smartphone or other electronic device of the user.

Although the placements in **FIG. 1A** of the off-board coil **111** in the central portion of the location where the EV **140** is parked and the on-board coil **121** on the central portion of the underside or ground-facing side of the EV **140** provide some benefits, the present disclosure is also based in part on recognition of some of the drawbacks thereof. Variations in different types of vehicles, such as their length and width, can make it difficult to determine where to place the off-board coil **111** of the off-board inductive charging system **110.** A large SUV may have substantially different dimensions than a small coupe or sedan, and accordingly achieving good alignment of the off-board coil **111** with different on-board coils **121** located at different positions on their respective EVs **140** may be difficult. In some instances, placements of the off-board coil **111** in the central portion of the parking location can cause structural issues, such as in multi-level parking garages. Installation of an off-board coil **111** can also be very expensive, especially when installed within the floor surface of the parking location.

**FIGS. 1B** and **1C** illustrate EV charging systems **100B** and **100C** with alternative placements of the off-board coil and the on-board coil according to aspects of the present disclosure. In **FIG. 1B****,** the on-board **coil 121F** may be located at a front portion or front bumper of the EV **140,** and in **FIG. 1C****,** the on-board coil **121B** may be located at a rear portion or rear bumper of the EV **140.** The off-board coil **111F** may be located at a front portion of the parking location. In some embodiments, a parking bumper may be used as a support for the off-board coil **111F.**

The placement of the on-board coils **121F/121B** and off-board coil **111F** in EV charging systems **100B** and **100C** may address some of the issues of the EV charging system **100A.** For example, many parking locations have bumper structures at the front portion of the parking location, and thus installing the off-board inductive charging system in a new parking location or retrofitting an existing parking location may be easier. Additionally, integrating the off-board coil **111F** in the parking bumper or other raised structure may improve coupling efficiency between the on-board coils **121F/121B** and off-board coil **111F.**

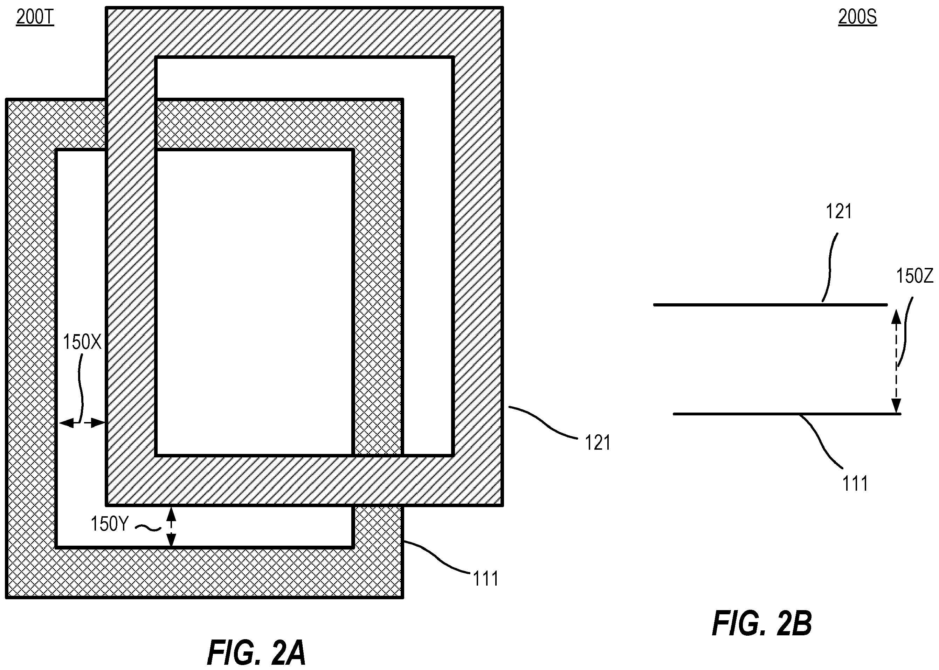

On the other hand, misalignments and airgaps may occur in the EV charging systems **100B** and **100C** of **FIGS. 1B** and **1C****,** as in the EV charging systems **100A** of **FIG. 1A****.** Examples of misalignments and an airgap are illustrated in **FIGS. 2A** and **2B. FIG. 2A** is a top view **200T** of an on-board coil **121** and an off-board coil **111.** **FIG. 2B** is a side view **200S** of the on-board coil **121** and the off-board coil **111.** The shape and dimensions of the on-board coil **121** and off-board coil **111** have been selected and/or exaggerated for clarity.

As can be seen, a misalignment may occur in one or both horizontal axes, resulting in a first axis (or X-axis) misalignment **150X,** or a second axis (or Y-axis) misalignment **150Y.** The misalignment on the first axis or second axis may be referred to herein as a horizontal misalignment. There may also be an excessive vertical (or Z-axis) distance between the off-board coil **111** and the off-board coil **121.**(or Z-axis) This excessive vertical distance may be referred to herein as an airgap **150Z.** A horizontal misalignment or vertical airgap in one or more axes of the on-board coil **121** and the off-board coil **111** may reduce an efficiency in the transfer of energy from the off-board coil **111** to the on-board coil **121,** and in some situations the misalignment or airgap may be severe enough so as to prevent the transfer of energy. These misalignments or airgap may occur because the EV **140** is not well-positioned in the parking location, for example because of a user error in positioning the EV **140,** because a vehicle in an adjacent location being poorly positioned, or because the on-board coil **121** and/or off-board coil **111** has been moved out of position. Correction of such misalignments or airgap may require the user to reposition the EV **140,** which may result in delays and/or poor user experience.

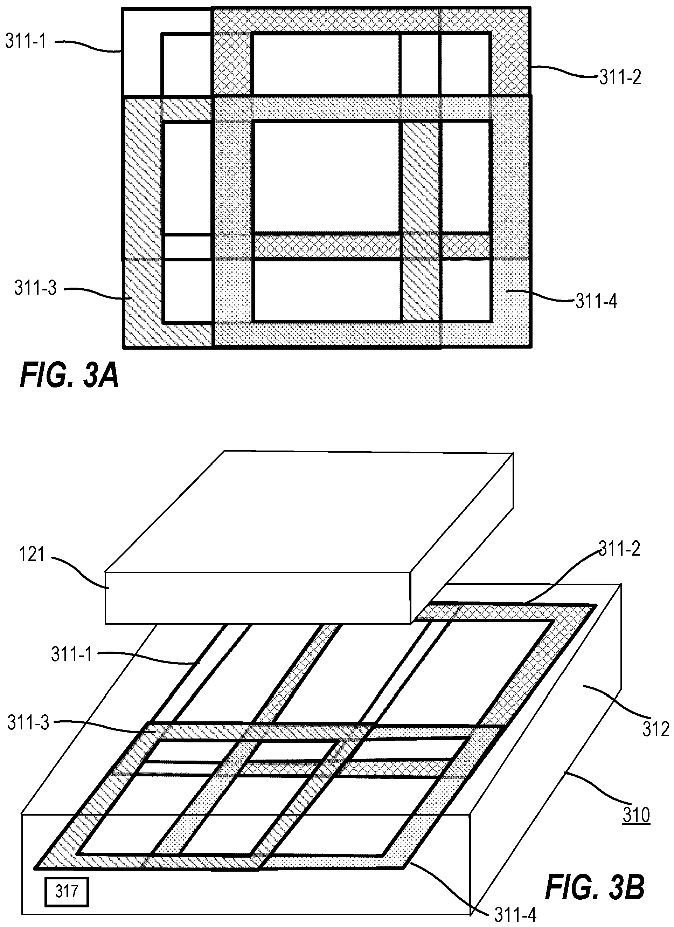

To address these and other issues, some embodiments of the present inventive concepts provide methods, systems, and devices which may be able to detect and/or minimize misalignment or airgap issues that would reduce or prevent effective coupling between the on-board and off-board coils. **FIG. 3A** and **3B** illustrate a charging apparatus **310** that may be used in the off-board inductive charging system **110** of **FIGS. 1A-C** instead of, or in addition to, the off-board coil **110/110F.** **FIG. 3A** is a top view of some components of the charging apparatus **310,** and **FIG. 3B** is a perspective view showing some components of the charging apparatus **310.** Those skilled in the art will readily appreciate that not all components of the charging apparatus are shown and described in the interest of brevity.

The charging apparatus **310** comprises a housing **312** with a plurality of emitter coils **311-1** to **311-4** therein. Herein, when the charging apparatuses according to embodiments of the present disclosure include multiple of the same components, these components may be referred to individually by their full reference numerals (e.g., a first coil **311-1**) and may be referred to collectively by the first part of their reference numeral (e.g., the coils **311**). Additionally, while four coils **311-1** to **311-4** are shown in **FIGS. 3A** and **3B****,** the present disclosure is not limited thereto. For example, two, three, or more than four coils **311** may be present in the charging apparatus **300.**

In some embodiments, the housing **312** may have a substantially planar base or bottom surface that is parallel to a floor or ground surface of the parking location where the housing **312** is installed. The housing **312** may also have one or more substantially planar side surfaces and/or one or more substantially planar upper surfaces, some of which may be angled with to the base. In some embodiments, the plurality of coils **311** may be installed to be coplanar with one of the side surfaces or upper surfaces of the housing **312.** In some embodiments, the plurality of coils **311** may be installed within the housing **312** at a depth from one of the side surfaces or upper surfaces. Each of the plurality of coils **311** may be a uniform depth from the side surface or upper surface of the housing **312.** In some embodiments, the housing **312** may be or may resemble a parking bumper. In some embodiments, a center or central portion of each of the plurality of emitter coils **311** may be offset in the first (X) and second (Y) axes from a center or central portion of the housing **312** when viewed in a plan view or when a plane in which the plurality of coils **311** are positioned is viewed in a plan view.

The charging apparatus may also include a microcontroller **317** that is coupled to each of the plurality of coils **311.** The microcontroller **317** may be within or on the housing **312** or may be separate therefrom and coupled via wires. In operation, the microcontroller **317** may be configured to cause AC that is provided from an energy source (not shown) to pass through one or more of the coils **311** present in the charging apparatus **310.** As described above, this AC creates a fluctuating magnetic field as it moves through the coil, which in turn induces a current in the on-board coil **121** present in the EV **140,** which can be used to charge an on-board battery of the EV **140.**

Additionally, the microcontroller **317** may be configured to identify one or more of the coils **311** present in the charging apparatus **310** to activate. In some embodiments, the microcontroller **317** may identify a coil **311** from among the plurality of coils **311** that has the highest or greatest energy transfer efficiency. For example, each of the plurality of coils **311** may be activated one-by-one in a sequence, and feedback indicative of the amount of energy being transferred for each coil (such as a coupling factor) may be received by the microcontroller **317.** As examples, the feedback may be received from the coils **311** and/or from a device on the EV **140** such as the on-board coil **121.**

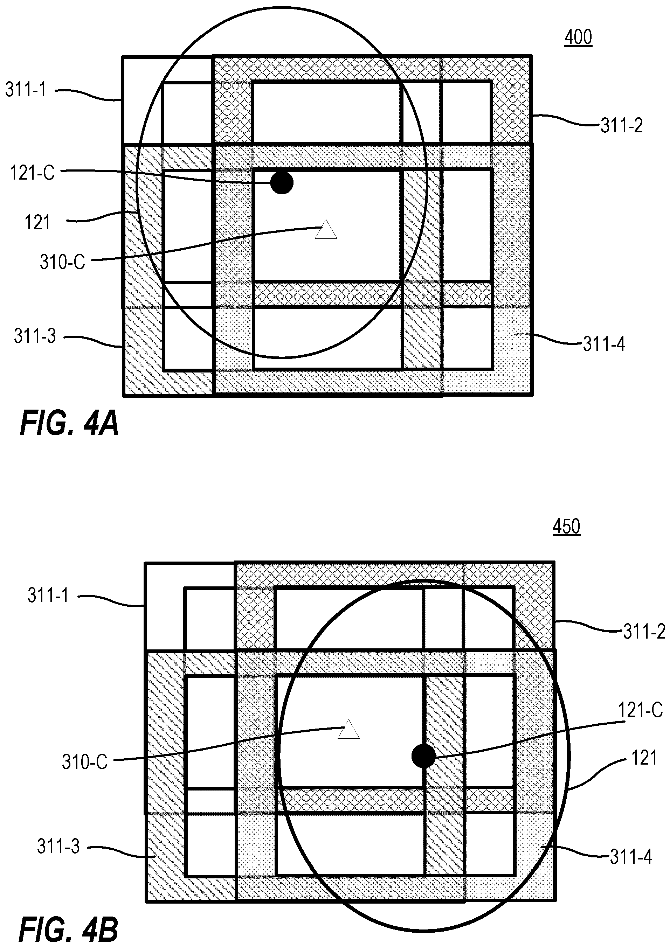

The charging apparatus **310** and the plurality of coils **311** thereof may minimize misalignment and/or airgap issues. **FIGS. 4A** and **4B** illustrate examples of how the charging apparatus **310** and the plurality of coils **311** thereof may be used to transfer energy to an on-board coil **121** of an EV **140** despite a horizontal misalignment between the EV **140** relative to the housing **312.**

In example **400** of **FIG. 4A****,** the center **121-C** of the on-board coil **121** is offset up and to the left (when viewed in a plan view, or from the perspective of the EV **140**) relative to the center **310-C** of the charging apparatus **310.** In example **450** of **FIG. 4B****,** the center **121-C** of the on-board coil **121** is offset down and to the right (again when viewed in a plan view, or from the perspective of the EV **140**) relative to the center **310-C** of the charging apparatus **310.** Despite these misalignments, the microcontroller **317** may be able to initiate transfer of energy from the charging apparatus **310** to the on-board coil **121** by selecting the first coil **311-1** in example **400** of **FIG. 4A****,** and by selecting the fourth coil **311-4** in the example **450** of **FIG. 4B****.**

In some embodiments, the plurality of coils **311** may be arranged to provide for energy transfer despite a misalignment that may be measured as a percentage of a width (in the first or X-axis) or depth (in the second or Y-axis) of the housing **312** or of a component of the **EV 140.** For example, energy transfer may be initiated if a center **121-C** of the on-board coil **121** is offset from a center **310-C** of the charging apparatus **310** by 10-40% of the width of the housing **312** or component of the EV **140** in the first axis. As another example, energy transfer may be initiated if a center **121-C** of the on-board coil **121** is offset from a center **310-C** of the charging apparatus **310** and 20-80% of the depth of the housing **312** or component of the EV **140** in the second axis.

In some embodiments, the power transferred may reach or exceed 20 kilowatts (kW). In some embodiments, the efficiency of the power transferred between the selected and activated off-board coil **311** and the on-board coil **121** may reach or exceed 95%.

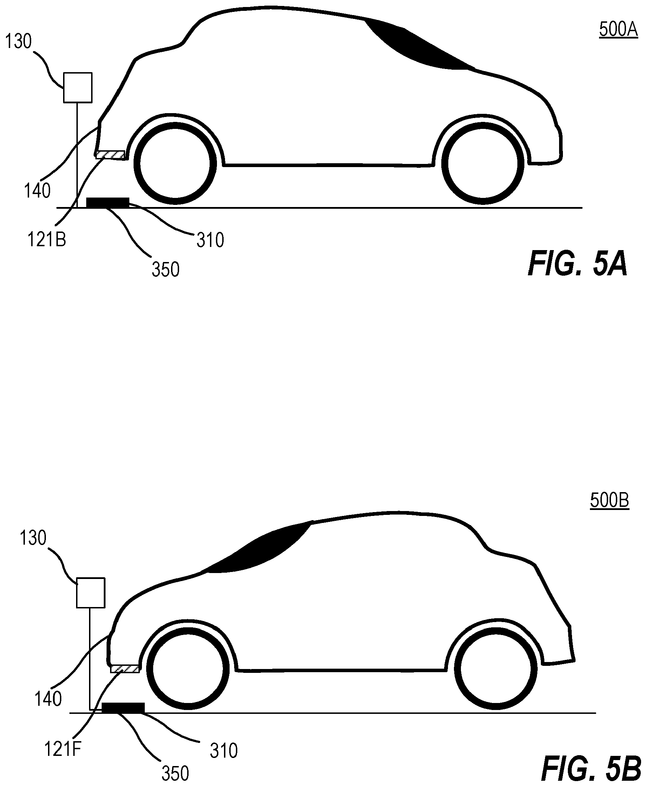

**FIGS. 5A** and **5B** illustrate EV charging systems **500A** and **500B,** which are similar to the EV charging systems **100B** and **100C** of **FIGS. 1B** and **1C****,** respectively. **FIGS. 5A** and **5B** demonstrate that in some embodiments, a positioning device **350** may be added to the charging apparatus **310.** The positioning device **350** and/or the microcontroller **317** may be configured to check or determine the presence of the parked EV **140,** which may be used to trigger the identification of one of the plurality of coils **311** to activate and use for energy transfer. For example, the positioning device **350** may be an optical device configured to detect the presence of the EV **140** optically or a RF-based device configured to receive an RF signal from the EV **140.** **FIG.** 5A also illustrates that an on-board **coil 121F** may be located at a front portion or front bumper of the EV **140,** and **FIG. 5B** also illustrates that the on-board coil **121B** may be located at a rear portion or rear bumper of the EV **140.** The charging apparatus **310** may be located at a front portion of the parking location. A controller **130** may be communicatively coupled to the charging apparatus **310** and may be used by a user to initiate charging of the EV **140** (i.e., initiate a transfer of energy through inductive coupling of the off-board coil **111** and the on-board coil **121**) and perform other actions with respect to the EV charging systems **500A** and **500B.**

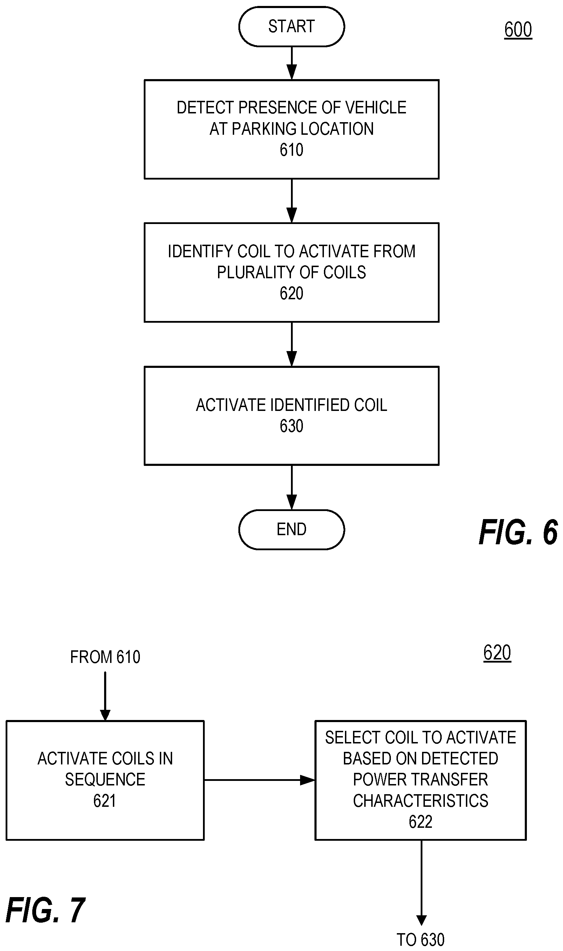

**FIG. 6** is a flowchart illustrating operations within methods of initiating energy transfer from a charging apparatus **300** comprising a plurality of coils **311** to a on-board coil of an electric vehicle **140** according to aspects of the present disclosure. Accordingly, **FIG. 6** may be understood to be a flowchart illustrating operations within methods of charging an electric vehicle according to aspects of the present disclosure. **FIG. 7** is a flowchart illustrating and providing greater detail of an operation shown in **FIG. 6****.**

In **FIG. 6** and flowchart **600** thereof, in operation **610** a charging apparatus, and specifically a controller or microcontroller thereof, may detect a presence of a vehicle at a parked location associated with the charging apparatus. For example, the charging apparatus **310** (and the positioning device **350** thereof) may be configured to detect the presence the EV **140** and the on-board coil **121** thereof. In some embodiments, the EV **140** may be configured to transmit a signal to the positioning device **350** when the EV **140** is in a general position within the parking location. In some embodiments, on-board inductive charging system **120** may be configured to transmit an acknowledgement responding to an identification pulse or signal transmitted by the positioning device **350.**

In operation **620,** the charging apparatus may be configured to identify a coil to activate from the plurality of coils **311.** As seen in **FIG. 7****,** in some embodiments, identifying a coil to activate from the plurality of coils **311** may comprise activating each of the coils **311** in a sequence in operation **621,** and then selecting a coil from among the plurality of coils **311** to activate based on detected power transfer characteristics. These detected power transfer characteristics may be detected by the coils **311** and/or based on signals from a device on the EV **140** such as the on-board coil **121.**

Returning to **FIG. 6****,** in operation **630** the identified coil from the plurality of coils may be activated.

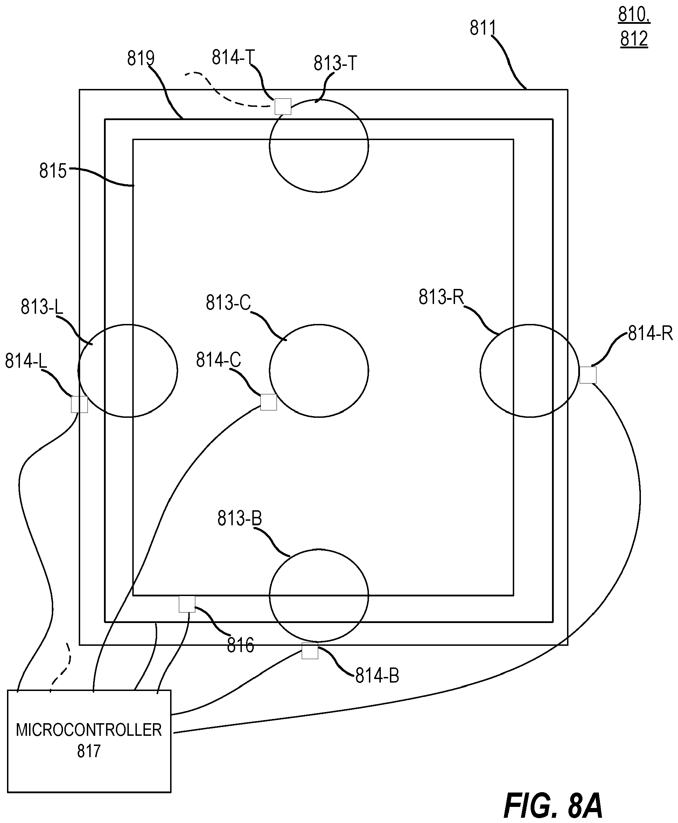

The EV charging systems described above with reference to **FIGS. 3-7** may be able to reduce the frequency of misalignments in which power cannot be transferred from the off-board system to the on-board system, and/or the frequency of misalignments in which power is transferred inefficiently. Example embodiments of the present inventive concepts will now be described with reference to **FIGS. 8A-12** and **15** in which a off-board system may detect a presence and position of an on-board system of an EV positioned in the proximity of the off-board charging system, and vice versa, and if the positioning of the off-board and on-board systems is able to support a proper and safe power transfer. Misalignments and/or airgaps in which power cannot be transferred from the off-board system to the on-board system, and/or misalignments or airgaps in which power would be transferred inefficiently can thus be identified. Example embodiments of the present inventive concepts described with reference to **FIGS. 8A-12** and **15** in which data may be transmitted from the vehicle to the charger from a short-range wireless communication system before, during, and after a charging system.

**FIG. 8A** shows a charging apparatus **810** of an off-board system in accordance with aspects of the present disclosure. The charging apparatus **810** may include a housing **812** having therein a power transfer coil **811,** a plurality of horizontal alignment coils **813,** horizontal alignment signal processing circuits **814,** a data reception and airgap alignment coil **815,** a data reception and airgap alignment signal processing circuit **816,** a signal emission coil **819,** and a microcontroller **817.** The charging apparatus **810** may be a component within an off-board inductive charging system (with power transfer coil **811** analogous to the off-board coils **111** and **311** discussed above) and may be used in EV charging systems having components similar to those of **FIGS. 1A-C** and **FIGS. 5A-B****.** The similar components and systems are not described again herein in the interest of brevity.

In some embodiments, the housing **812** may have a substantially planar base or bottom surface that is parallel to a floor or ground surface of the parking location where the housing **812** is installed. The housing **812** may also have one or more substantially planar side surfaces and/or one or more substantially planar upper surfaces, some of which may be angled with to the base. In some embodiments, the power transfer coil **811,** signal emission coil **819,** horizontal alignment coils **813,** and data reception and airgap alignment coil **815** may be installed to be coplanar with one of the side surfaces or upper surfaces of the housing **812.** In some embodiments, the power transfer coil **811,** horizontal alignment coils **813,** data reception and airgap alignment coil **815,** and signal emission coil **819** may be installed within the housing **812** at a depth from one of the side surfaces or upper surfaces. Each of the power transfer coil **811,** horizontal alignment coils **813,** and data reception and airgap alignment coil **815** may be a uniform depth from the side surface or upper surface of the housing **812.** In some embodiments, the housing **812** may be or may resemble a parking bumper.

The power transfer coil **811** may be similar to the emitter coils **111** and **311** discussed above. In operation, the microcontroller **817** may be configured to cause AC that is provided from an energy source (not shown) to pass through the power transfer coil **811** present in the charging apparatus **800.** As described above, this AC creates a fluctuating magnetic field as it moves through the coil, which in turn induces a current in an on-board coil **121** present in the EV **140,** which can be used to charge an on-board battery of the EV **140.**

Each of the plurality of horizontal alignment coils **813** may be configured to receive an alignment signal during an alignment phase of a charging operation in which energy is to be transferred from the charging apparatus **810** to the EV **140.** The alignment phase of the charging operation may be performed prior to the initiation of an energy transfer and may serve as a decision point for the charging apparatus **810** to decide whether the energy transfer may be initiated safely and efficiently. As seen in **FIG. 8A****,** five horizontal alignment coils **813** may be present in the charging apparatus **810,** although the present disclosure is not limited thereto. In the embodiment illustrated in **FIG. 8A****,** the plurality of horizontal alignment coils **813** may include a top alignment coil **813-T,** a left alignment coil **813-L,** a right alignment coil **813-R,** a bottom alignment coil **813-B,** and a center alignment coil **813-C.**

Each of the plurality of horizontal alignment coils **813** may be coupled to the microcontroller **817** via a respective one of the plurality of horizontal alignment signal processing circuits **814.** Although **FIG. 8A** shows each horizontal alignment signal processing circuit **814** as closer to its respective one of the plurality of horizontal alignment coils **813** than to the microcontroller **817,** the present disclosure is not limited thereto.

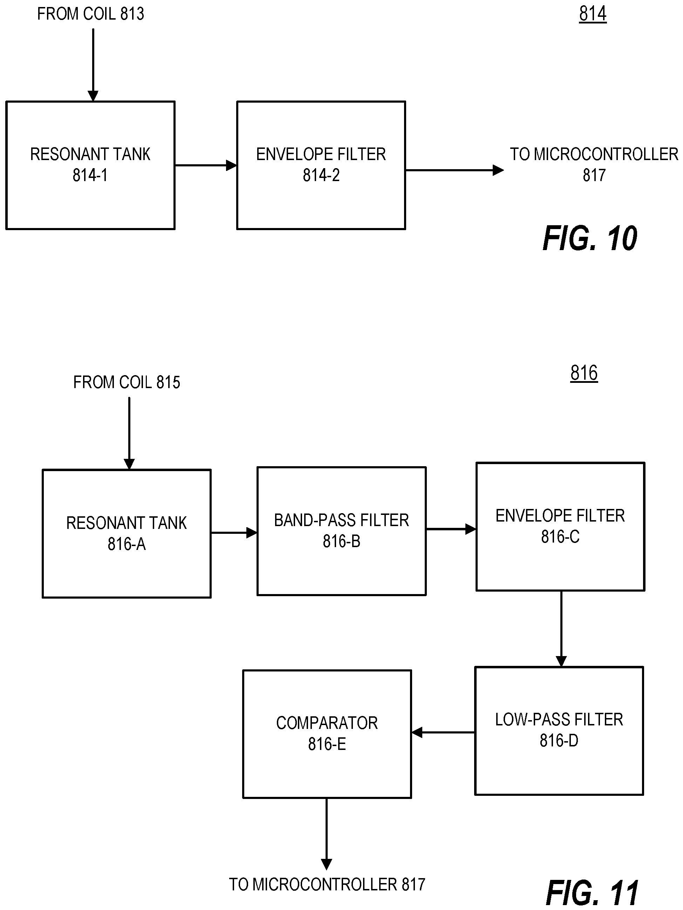

An example of a horizontal alignment signal processing circuit **814** is shown in the block diagram of **FIG. 10****.** Each horizontal alignment signal processing circuit **814** may include a resonant tank circuit **814-1** associated with a tuned capacitor. The resonant tank circuit **814-1** may be configured to maximize an amplitude of a received signal at the emitter frequency and minimize the amplitude for all other signals. This may improve a signal quality of the emitter and protect the positioning circuit from the strong electromagnetic field of the primary converter. Each horizontal alignment signal processing circuit **814** may also include an envelope filter **814-2** which may be configured to provide a DC signal readable by the microcontroller **817.** The DC signal may be based on a shape of a waveform of the AC signal received by the respective alignment coil **813.**

The data reception and airgap alignment coil **815** may also be configured to receive the alignment signal during the alignment phase of the charging operation. The data reception and airgap alignment coil **815** may be coupled to the microcontroller **817** via the data reception and airgap alignment signal processing circuit **816.** Although **FIG. 8A** shows the data reception and airgap alignment signal processing circuit **816** as closer to the data reception and airgap alignment coil **815** than to the microcontroller **817,** the present disclosure is not limited thereto. An example of data reception and airgap alignment signal processing circuit **816** will be described with reference to **FIG. 11****.**

The signal emission coil **819** may also be configured to transmit an alignment signal during the alignment phase of the charging operation and/or a data signal in phases of the charging operation other than the alignment phase. The signal emission coil **819** may be coupled to the microcontroller **817** via a signal emission signal processing circuit (not shown).

The microcontroller **817** may be configured to detect horizontal alignments and/or misalignments and vertical spacing or airgap between the on-board coil **121** and the power transfer coil **811.** Horizontal alignments and/or misalignments may be detected based on performed comparisons of magnitudes of signals received from each of the left alignment coil **813-L,** top alignment coil **813-T,** bottom alignment coil **813-B,** and right alignment coil **813-R** with the magnitude of the signal received from the center alignment coil **813-C.** The magnitude of each coil signal **813** may be a voltage of the DC signal output by the corresponding and respective horizontal alignment signal processing circuit **814.** If the magnitude of the signals received from the left alignment coil **813-L** or right alignment coil **813-R** exceeds the magnitude of the signal received from the center alignment coil **813-C,** then the microcontroller **817** may determine or decide that the on-board coil **121** is misaligned in the first (X) axis. If the magnitude of the signals received from the top alignment coil **813-T** or bottom alignment coil **813-B** exceeds the magnitude of the signal received from the center alignment coil **813-C,** then the microcontroller **817** may determine or decide that the on-board coil **121** is misaligned in the second (Y) axis.

Airgaps may be detected based on performed comparisons of magnitudes of signals received from the data reception and airgap alignment coil **815** with a threshold value. If the magnitude of the signal received from the data reception and airgap alignment coil **815** exceeds the threshold value, then the microcontroller **817** may determine or decide that the on-board coil **121** is sufficiently close in the third (Z) axis. If the magnitude of the signal received from the data reception and airgap alignment coil **815** does not exceed the threshold value, then the microcontroller **817** may determine or decide that there is an airgap between the on-board coil **121** and the off-board coil **111.**

The microcontroller **817** may be configured to determine or decide that the on-board coil **121** is aligned with the power transfer coil **811** in one horizontal axis and misaligned in the other horizontal axis, misaligned in both horizontal axes, or aligned in both horizontal axes, and may perform an action responsive to the determination or decision. The microcontroller **817** may be configured to determine or decide that the on-board coil **121** is misaligned with the power transfer coil **811** in the vertical axis or aligned in the vertical axis, and may perform an action responsive to the determination or decision.

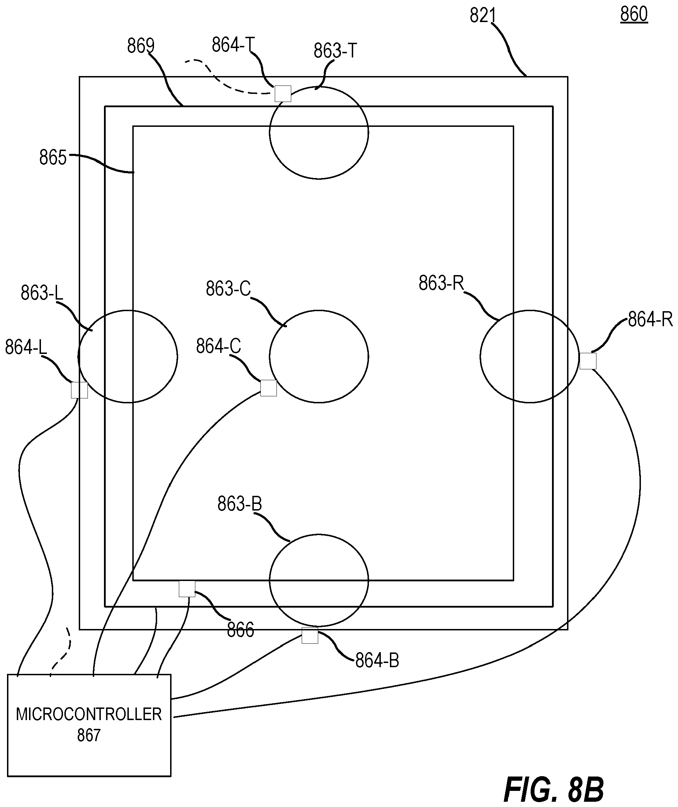

As seen in **FIG. 8B****,** the EV **140** (e.g., an on-board system) may also include a charging apparatus **860** may include a power reception coil **821,** a plurality of horizontal alignment coils **863,** horizontal alignment signal processing circuits **864,** a data reception and airgap alignment coil **865,** a data reception and airgap alignment signal processing circuit **866,** a signal emission coil **869,** and a microcontroller **867.** The power reception coil **821** may be similar to the on-board coil **121** discussed above, and may be on the underside or ground-facing side of the EV **140.** The power reception coil **821** may be positioned on the underside or ground-facing side of the EV **140** between the front and rear wheels of the EV **140,** and/or at a central portion of the EV **140.**

The remaining components of the charging apparatus **860** may be similar to the corresponding components of the charging apparatus **810.** In other words, the plurality of horizontal alignment coils **863** may be similar to the horizontal alignment signal processing circuits **864,** data reception and airgap alignment coil **865,** data reception and airgap alignment signal processing circuit **866,** signal emission coil **869,** and the microcontroller **867** of the charging apparatus **860** may each be similar to the corresponding plurality of horizontal alignment coils **813,** horizontal alignment signal processing circuits **814,** data reception and airgap alignment coil **815,** data reception and airgap alignment signal processing circuit **816,** signal emission coil **819,** and microcontroller **867** of the charging apparatus **810,** and duplicate description thereof is omitted herein in the interest of brevity. In some embodiments, the components of the charging apparatus **860** may be within a housing mountable onto the EV **140.**

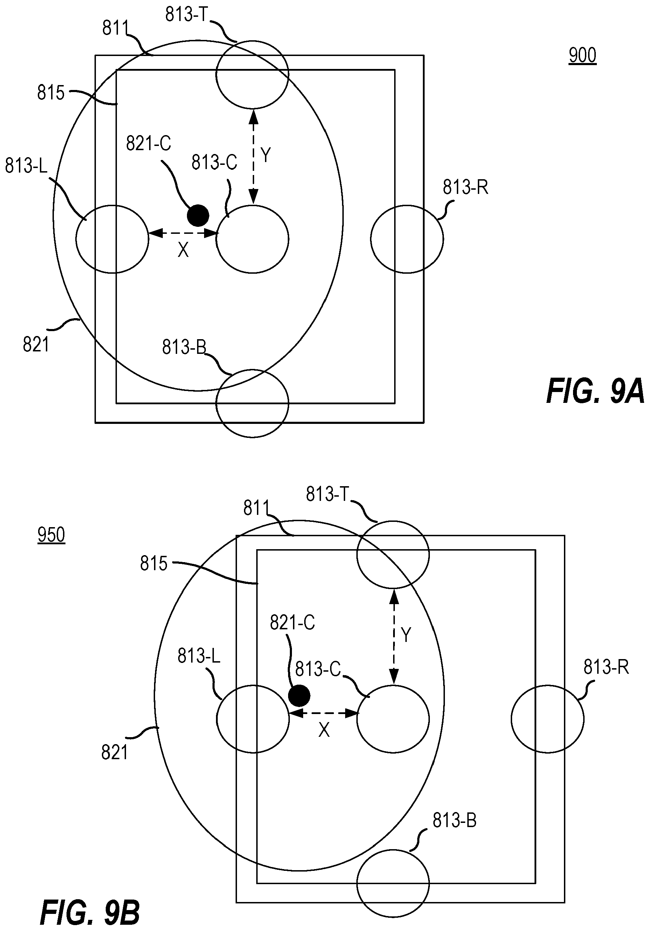

The charging apparatuses **810/860** and the plurality of alignment coils **813/863** and **815/865** thereof may be used to detect an alignment of the EV **140** and the power reception coil **821** relative to the power transfer coil **811.** **FIGS. 9A** and **9B** illustrate examples of how the charging apparatus **810** and the plurality of coils **813** thereof may be used to detect a horizontal alignment of the EV **140** relative to the housing **812.**

In example **900** of **FIG. 9A****,** the center **821-C** of the on-board power reception coil **821** is offset a first distance to the left (when viewed in a plan view, or from the perspective of the EV **140**) of the center of the center coil **812-C** of the plurality of coils **811** of the charging apparatus **810.** In example **950** of **FIG. 9B****,** the center **821-C** of the on-board power reception coil **821** is offset a second distance to the left (when viewed in a plan view, or from the perspective of the EV **140**) of the center of the center coil **812-C** of the plurality of coils **811** of the charging apparatus **810.** In each of the examples **900** and **950,** the microcontroller **817** may receive a left signal from the left coil **813-L** and a center signal from the center coil **813-C,** and may compare a magnitude of the left signal with a magnitude of the center signal. The magnitude of the left signal may be a voltage of the DC signal output by the left horizontal alignment signal processing circuit **814-L,** and the magnitude of the center signal may be a voltage of the DC signal output by the center horizontal alignment signal processing circuit **814-C.** In example **900** of **FIG. 9A****,** the magnitude of the center signal may exceed the magnitude of the left signal, and accordingly the microcontroller **817** may determine or decide that the on-board power reception coil **821** is not misaligned to the left. In example **950** of **FIG. 9B****,** the magnitude of the center signal may be less than the magnitude of the left signal, and accordingly the microcontroller **817** may determine or decide that the on-board power reception coil **821** is misaligned to the left.

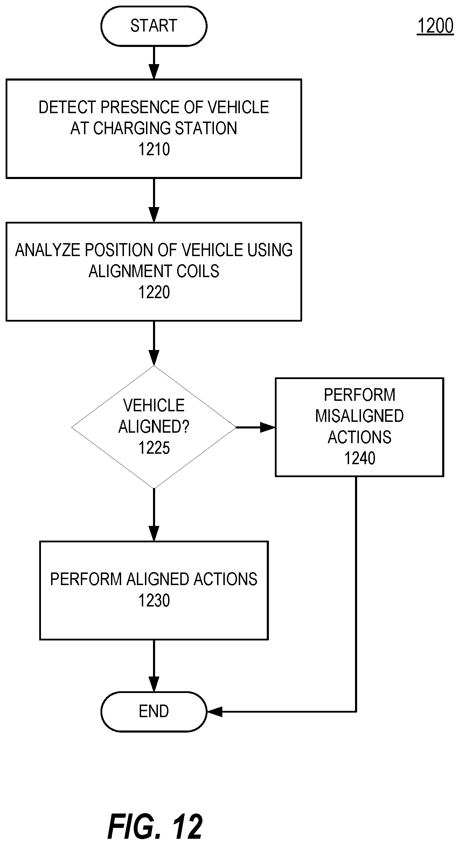

**FIG. 12** is a flowchart illustrating operations within methods of initiating energy transfer from a charging apparatus **810** to an on-board coil **121/821** of an electric vehicle **140,** where the charging apparatus **810** includes a power transfer coil **811,** a plurality of horizontal alignment coils **813,** and a vertical alignment coil **815,** according to aspects of the present disclosure. Accordingly, **FIG. 12** may be understood to be a flowchart illustrating operations within methods of charging an electric vehicle according to aspects of the present disclosure.

In **FIG. 12** and flowchart **1200** thereof, in operation **1210** a charging apparatus, and specifically a controller or microcontroller thereof, may detect a presence of a vehicle at a parked location associated with the charging apparatus. For example, the charging apparatus **810** (and the signal emission coil **819** thereof) may periodically transmit an identification pulse or signal. In other words, the charging apparatus **810** may be periodically transmit an "Are you there?" signal. The on-board inductive charging system **120** of the EV **140** and the data reception coil **815** thereof may be configured to receive the identification pulse or signal when the EV **140** is in a general position within the parking location. The on-board inductive charging system **120** or charging apparatus **860** may be configured to transmit (via the signal emission coil **869**) an acknowledgement responding to the identification pulse or signal. In other words, the on-board inductive charging system **120** or charging apparatus **860** may respond to the "Are you there?" signal with an "I'm here" signal.

Once a presence of an EV **140** has been detected, in operation **1220** the position of the EV may be analyzed using the plurality of horizontal alignment coils **813** and the airgap alignment coil **815** as described above. For example, the microcontroller **817** may detect horizontal alignments or misalignments based on performed comparisons of magnitudes of signals received from each of the left alignment coil **813-L,** top alignment coil **813-T,** bottom alignment coil **813-B,** and right alignment coil **813-R** with the magnitude of the signal received from the center alignment coil **813-C.** The microcontroller **817** may detect vertical spacing and/or airgaps based on performed comparisons of magnitudes of signals received from the data reception and airgap alignment coil **815** with a threshold value.

In operation **1225,** a determination is made as to whether the EV **140** is aligned. If the EV **140** is not aligned ("N" branch from operation **1225**), then in operation **1240** one or more misaligned actions may be performed. For example, a message may be communicated to the EV **140** and/or to the user that the EV **140** is not aligned. On the other hand, if the EV **140** is aligned ("Y" branch from operation **1225**), then in operation **1230** one or more aligned actions may be performed. For example, a message may be communicated to the EV **140** and/or to the user that the EV **140** is aligned, and/or a subsequent operation in methods of charging the EV **140** may be performed. In some embodiments, an aligned action performed in operation **1230** include activating the power transfer coil **811.**

In some embodiments, operation **1210** of the flowchart **1200** of **FIG. 12** may be performed as part of an identification phase of a method of charging the EV **140,** operations **1220, 1225,** and **1240** may be performed as part of an alignment phase and/or a standby phase of a method of charging the EV **140,** and operation **1230** may be performed as part of a charge phase of a method of charging the EV **140.**

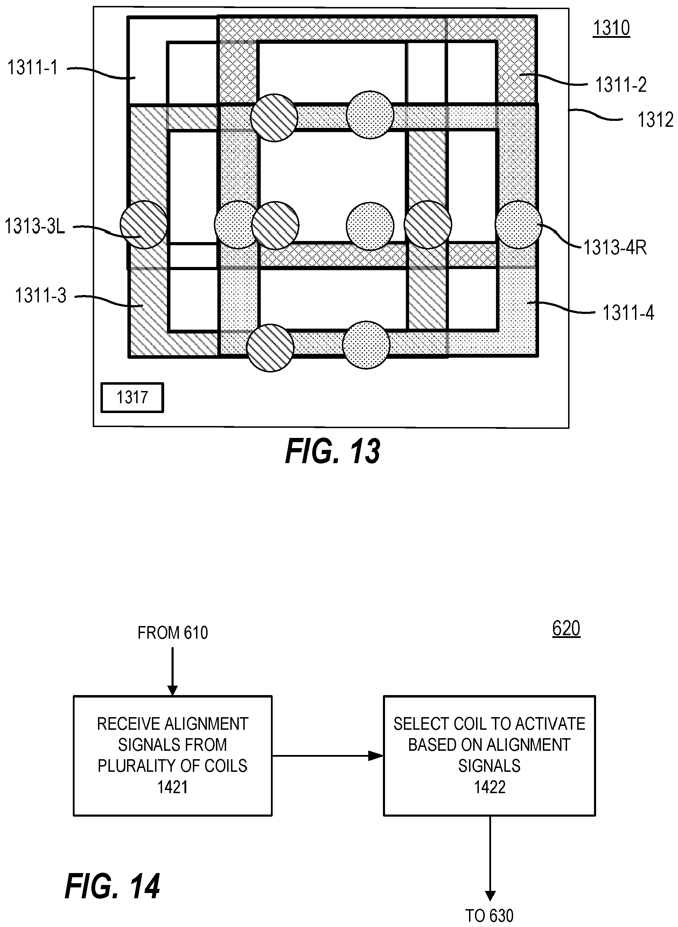

In some embodiments, the inventive concepts described above with reference to **FIGS. 3-7** may be combined with the inventive concepts described above with reference to **FIGS. 8A-12** and **15.** Accordingly, some aspects of the present disclosure provide a charging apparatus that may detect a presence and position of an EV positioned in the proximity of the charging apparatus and that may be able to reduce the frequency of misalignments in which power cannot be transferred from the off-board system to the on-board system, and/or the frequency of misalignments in which power is transferred inefficiently. Example embodiments of the present inventive concepts will now be described with reference to **FIGS. 13** and **14****.**

**FIG. 13** illustrates a top view of some components of a charging apparatus **1310** that may be used in an off-board inductive charging system, such as those already described herein. Those skilled in the art will readily appreciate that not all components of the charging apparatus are shown and described in the interest of brevity.

The charging apparatus **1310** may include comprises a housing **1312** with a plurality of primary power transfer coils **1311-1** to **1311-4** therein. While four primary power transfer coils **1311-1** to **1311-4** are shown in **FIG. 13****,** the present disclosure is not limited thereto. The housing **1312** may be similar to the housings **312** and **812** already described.

Each of the plurality of primary power transfer coils **1311** may have a respective plurality of horizontal alignment coils **1313** which may be provided in a similar number and arrangement as seen in **FIG. 8A****.** As an example, where four primary power transfer coils are **1311-1** to **1311-4** are present in the charging apparatus **1310,** there may be twenty horizontal alignment coils **1313** (four sets of horizontal alignment coils **1313** corresponding respectively to the four primary power transfer coils **1311,** with five alignment coils **1313** in each set). Only the horizontal alignment coils **1313** that correspond to the primary power transfer coils **1311-3** and **1311-4** are shown in **FIG. 13** to improve the clarity of the illustration. As discussed above, each horizontal alignment coil **1313** may be configured to receive an alignment signal from the EV **140** during an alignment phase of a charging operation in which energy is to be transferred from the charging apparatus **1310** to the EV **140.**

The microcontroller **1317** may be configured to detect horizontal alignments and/or misalignments, and/or vertical spacing and/or airgaps between the on-board coil **121** relative to each primary power transfer coil **1311.** For example, horizontal alignments and/or misalignments may be detected based on performed comparisons of magnitudes of signals received from each of the left coil, top coil, bottom coil, and right coil with the magnitude of the signal received from the center coil of each set of horizontal alignment coils **1313.**

Additionally, the microcontroller **1317** may be configured to identify one or more of the power transfer coils **1311** present in the charging apparatus **1310** to activate. In some embodiments, the microcontroller **1317** may identify a power transfer coil **1311** from among the plurality of power transfer coils **1311** that has the highest or greatest energy transfer efficiency. For example, the microcontroller **1317** may identify a power transfer coil **1311** from among the plurality of power transfer coils **1311** that is aligned or is most aligned with the on-board coil **121,** based on the detected horizontal alignments and/or misalignment.

Additionally, the microcontroller **1317** may be configured to detect vertical spacing and/or airgaps based on performed comparisons of magnitudes of a signal received from a data reception and airgap alignment coil (not shown in **FIG. 13**) with a threshold value.

**FIG. 14** in conjunction with **FIG. 6** is a flowchart according to aspects of the present disclosure. The flowchart of **FIGS. 6** and **14** illustrates operations within methods of initiating energy transfer to an on-board coil of an electric vehicle **140** from a charging apparatus **1310** comprising a plurality of power transfer coils **1311** each associated with a respective plurality of horizontal alignment coils **1313.** Accordingly, **FIGS. 6** and **14** may be understood to be a flowchart illustrating operations within methods of charging an electric vehicle according to aspects of the present disclosure.

As previously discussed, in operation **620** of **FIG. 6****,** the charging apparatus may be configured to identify a coil to activate from the plurality of power transfer coils **1311.** As seen in **FIG. 14****,** in some embodiments, identifying a coil to activate from the plurality of power transfer coils **1311** may comprise receiving alignment signals from each plurality of horizontal alignment coils **1313** associated with a respective one of the power transfer coils **1311** in operation **1421,** and then selecting a coil from among the plurality of power transfer coils **1311** to activate based on the received alignment coils in operation **1422.** For example, the microcontroller **1317** may select a power transfer coil **1311** from among the plurality of power transfer coils **1311** that is aligned or is most aligned with the on-board power reception coil **121/821,** based on the received alignment signals.

In addition to detection and reduction of misalignments as discussed above, aspects of the present disclosure are based on the recognition that it may be desirable to communicate messages (including commands, requests, instructions, information, acknowledgements, or the like) between components of the off-board system and components of the on-board system. In some embodiments, this information may be communicated via a pathway independent of the off-board and on-board coils, such as via a separate optical or RF connection. Referring again to **FIGS. 8A** and **8B****,** the signal emission coils **819/869** and the data reception and airgap alignment coil **815/865** may be used to facilitate communication in a bidirectional fashion between the charging apparatuses **810** and **860**(and thus, between a charging system and an EV **140**).

It may be desirable that bi-directional communication may occur before, during, and after energy is transferred using the off-board and on-board coils. For example, some messages that may be communicated prior to initiation of energy transfer may include an identity of the EV **140** or a user thereof, payment or account information, compatibility information, information about energy to be transferred, and/or alignment information (e.g., the EV **140** is aligned or is not aligned). Some messages that may be communicated during energy transfer (e.g., while the power transfer coil **811** is activated) includes information about energy being transferred, communications regarding the charging process, regulation data or "heartbeat" indicating the presence of the EV **140** and so on. Some messages that may be communicated after energy transfer may include confirmations of an amount of energy transferred, payment or account information, and so on.

To facilitate communication, the charging apparatuses **810/860** may be configured to use signal emission coils **819/869** for data transmission, and the data reception and airgap alignment coil **815/865** for data reception. The data reception and airgap alignment coils **815/865** may be coupled to a data reception and airgap alignment signal processing circuit **816/866.**

Messages may be transferred from the charging apparatus **810** to charging apparatus **860,** and vice versa, by emitting signals using signal emission coils **819/869** and receiving signals using the data reception and airgap alignment coils **815/865.** Various communication schemes may be employed to coordinate communication between the charging apparatus **810** and the charging apparatus **860.** For example, communications may be time-division multiplexed, such that the charging apparatus **810** transmits communications during a first time slot and the charging apparatus **860** transmits communications during a second time slot. As another example, communications may be frequency-division multiplexed, such that the charging apparatus **810** transmits using a first frequency or frequency band, and the charging apparatus **860** transmits communications in a second frequency or frequency band.

For example, the microcontroller **817** may be configured to cause a communication signal to be applied to the signal emission coil **819.** The microcontroller **817** may be configured to receive signals from the data reception and airgap alignment coil **815** and extract messages or data therefrom.

During energy transfer, the data reception and airgap alignment coil **815** may receive both an AC communication signal emitted from the signal emission coil **869** of the EV **140** (i.e., a signal including a message from the EV **140**) as well as the AC power signal emitted from the power transfer coil **811** of the charging apparatus **810.** This AC power signal may dominate the communication signal. Accordingly, the data reception and airgap alignment signal processing circuit **816** may be provided to separate the communication signal from the AC power signal.

An example of the data reception and airgap alignment signal processing circuit **816** is shown in the block diagram of **FIG. 11****.** The data reception and airgap alignment signal processing circuit **816** may include a resonant tank circuit **816-A,** a band-pass filter **816-B,** an envelope filter **816-C,** a low-pass filter **816-D,** and a comparator **816-E.** The resonant tank circuit **816-A** may be similar to the resonant tank circuit **814-A** discussed with reference to the horizontal alignment signal processing circuit **814** and may be configured to maximize an amplitude of a received signal at the communication frequency band and minimize the amplitude for all other signals. An output of the resonant tank circuit **816-A** may be provided to the band-pass filter **816-B,** which may be configured to block a low frequency part of the received signal. For example, the band-pass filter may be configured to block signals in a frequency band associated with the AC power signal emitted from the power transfer coil **811,** and pass signals in a different frequency band associated with communications between the charging apparatus **810** and the charging apparatus **860.** The data reception and airgap alignment signal processing circuit **816** may also include an envelope filter **816-C** and low pass filter **816-D** which may be configured to filter noise and other signal components from the received signal. The cleaned-up signal may be provided to a comparator **816-E,** which may be configured to digitize the signal for the microcontroller **817.**

Although the above discussion of how components of the charging apparatus **860**and the charging apparatus **810** may communicate bidirectionally is provided with reference to **FIGS. 8A** and **8B****,** it is to be understood that the inventive concepts thereof may be applied to the charging apparatus **310** or **1310.** In other words, exemplary embodiments of the present disclosure may include one or more of the plurality of emitter coils **311,** the plurality of horizontal alignment coils **813,** and/or the data reception and alignment coil **815.**

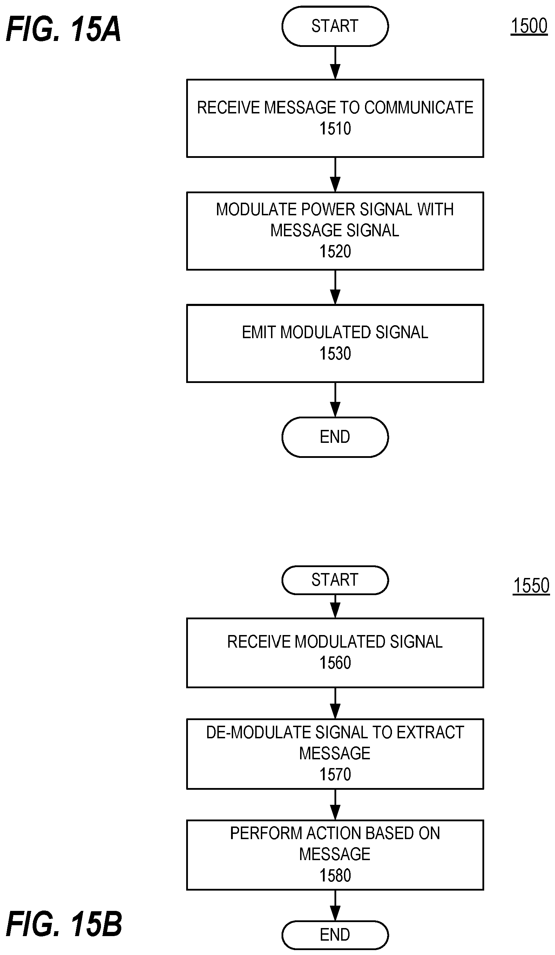

**FIGS. 15A** and **15B** are flowcharts which illustrate communication of a message between an on-board component of the EV (e.g., the EV **140** of **FIGS. 1A-C** and **5A-B**) and other components of an EV charging system (e.g., the EV charging systems **100A, 100B, 100C, 500A,** and **500B** of **FIGS. 1A-C** and **5A-B**) during a transfer of energy, according to some embodiments of the present inventive concepts. The communication may be between an on-board component of the EV (e.g., charging apparatus **860**) and the other components of the EV charging system may occur an "uplink" direction from an on-board coil (e.g., signal emission coil **869** of **FIG. 8B**) to an off-board coil (e.g., the data reception and airgap measurement coil **815** of **FIG. 8A**), or in a "downlink" direction from an off-board coil (e.g., the signal emission coil **819** of **FIG. 8A**) to an on-board coil (e.g., the data reception and airgap measurement coil **865** in **FIG. 8B**).

**FIG. 15A** and **FIG. 15B** describe transmitting/emitting a message and receiving a message, respectively. **FIGS. 15A** and **15B** are described from the perspective of an off-board inductive charging system or apparatus (e.g., the charging apparatuses **310, 810,** and **1310** of the present disclosure) with the understanding that those skilled in the art will readily appreciate that the on-board system (e.g., the charging apparatus **860**) may also emit and receive messages accordingly. Different messages (i.e., first and second messages) are discussed with respect to **FIGS. 15A** and **15B****.**

In **FIG. 15A** and flowchart **1500** thereof, in operation **1510** a charging apparatus, and specifically a controller or microcontroller thereof, may receive a message to communicate via a signal emission coil (e.g., signal emission coil **819**)**.** The message may be converted into a message signal. In operation **1520,** a power signal supplied to the signal emission coil **819,** which as described above is an AC signal having a frequency, may be modulated using the message signal. The modulated signal may be emitted in operation **1530.**

To illustrate by example, a message to be communicated may comprise a binary sequence having 0s and Is. When a binary '0' is to be communicated, the power signal may not be modulated, or may be modulated with a first frequency. When a binary '1' is to be communicated, the power signal may be modulated, or may be modulated with a second frequency different from the first frequency. For example, if the power signal is a 100 kilohertz (kHz) signal, then transmission of a binary '0' in the message may comprise emitting the 100 kHz signal, and transmission of a binary '1' may comprise emitting the 100 kHz signal modulated with a 10-megahertz (mHz) signal.

In **FIG. 15B** and flowchart **1550** thereof, in operation **1560** a charging apparatus may receive a modulated signal via a reception coil (e.g., data reception and airgap alignment coil **815**). In operation **1570,** the modulated signal may be de-modulated using a signal processing circuit, such as the data reception and airgap alignment signal processing circuit **816,** and a message may be extracted therefrom. The signal processing circuit may comprise a band-pass filter to separate out a lower frequency signal from the modulated signal, resulting in a communication signal comprising the message. In operation **1580,** one or more actions may be performed based on the extracted message.

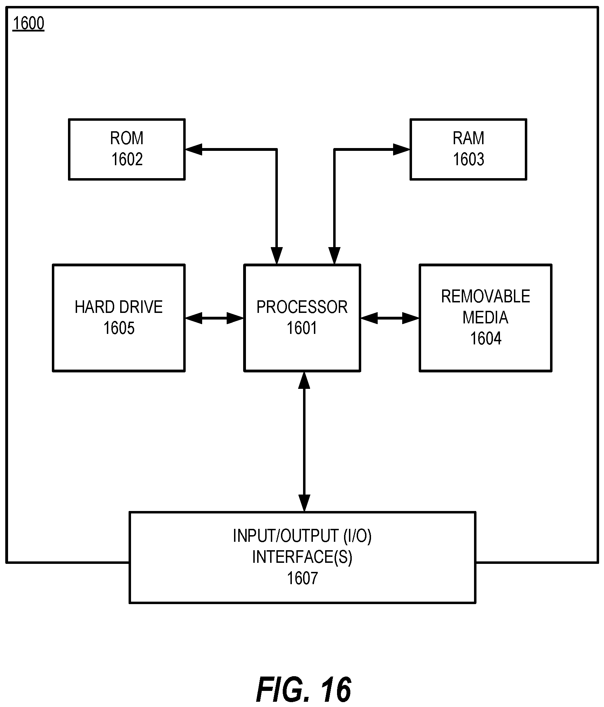

**FIG. 16** illustrates various components of a computing device **1600** which may be used to implement one or more of the devices herein, including the controller **130** of **FIGS. 1A-****C** and **4A-B,** the computing device associated with the EV **140** discussed in relation to **FIGS. 1A-C** and **4A-B****,** a computing device of the EV **140** itself, the microcontroller **616** of **FIG. 7****,** and other computing devices that implement or embody the present inventive concepts. **FIG. 16** illustrates hardware elements that can be used in implementing any of the various computing devices discussed herein. In some aspects, general hardware elements may be used to implement the various devices discussed herein, and those general hardware elements may be specially programmed with instructions that execute the algorithms discussed herein. In special aspects, hardware of a special and non-general design may be employed (e.g., ASIC or the like). Various algorithms and components provided herein may be implemented in hardware, software, firmware, or a combination of the same.

A computing device **1600** may include one or more processors **1601,** which may execute instructions of a computer program to perform any of the features described herein. The instructions may be stored in any type of computer-readable medium or memory, to configure the operation of the processor **1601.** For example, instructions may be stored in a read-only memory (ROM) **1602,** random access memory (RAM) **1603,** removable media **1604,** such as a Universal Serial Bus (USB) drive, compact disk (CD) or digital versatile disk (DVD), floppy disk drive, or any other desired electronic storage medium. Instructions may also be stored in an attached (or internal) hard drive **1605.** The computing device **1600** may be configured to provide output to one or more output devices (not shown) such as printers, monitors, display devices, and so on, and receive inputs, including user inputs, via input devices (not shown), such as a remote control, keyboard, mouse, touch screen, microphone, or the like. The computing device **1600** may also include input/output interfaces **1607** which may include circuits and/or devices configured to enable the computing device **1600** to communicate with external input and/or output devices (such as computing devices on a network) on a unidirectional or bidirectional basis. The components illustrated in **FIG. 16** (e.g., processor **1601,** ROM storage **1602**) may be implemented using basic computing devices and components, and the same or similar basic components may be used to implement any of the other computing devices and components described herein. For example, the various components herein may be implemented using computing devices having components such as a processor executing computer-executable instructions stored on a computer-readable medium, as illustrated in **FIG. 16****.** Some components of the computing device **1600** may be omitted in some implementations.

In view of the above, at least the following embodiments and/or implementations of the inventive concepts are disclosed herein.

According to some embodiments, a charging apparatus may be provided, with the charging apparatus configured to transfer energy via inductive coupling to an on-board power reception coil of a vehicle. The charging apparatus may include a plurality of power transfer coils; and a controller, configured to: detect a presence of the vehicle in a proximity of the charging apparatus; identify a power transfer coil from the plurality of power transfer coils to activate based on a position of the vehicle relative to the charging apparatus; and activate the identified power transfer coil.

In some embodiments, the controller of the charging apparatus may be configured to identify a power transfer coil from the plurality of power transfer coils to activate based on an activation of each power transfer coil of the plurality coils of the charging apparatus in a sequence and based on feedback indicating characteristics of an energy transfer resulting from the activation of each power transfer coil in the sequence.

In some embodiments, the charging apparatus may further include a plurality of sets of alignment coils, each set of alignment coils may be associated with a respective one of the plurality of power transfer coils, and the controller may be configured to identify a power transfer coil from the plurality of power transfer coils to activate based on a detection of alignment signals by each of the alignment coils.

In some embodiments, the controller may be configured to detect the presence of the vehicle in the proximity of the charging apparatus based on a signal received from a positioning device.

In some embodiments, the controller may be configured to detect the presence of the vehicle in the proximity of the charging apparatus based on a signal received from a component of the vehicle.

In some embodiments, the signal received from the component of the vehicle may be a signal acknowledging an identification signal transmitted by the charging apparatus.

In some embodiments, a center of each of the plurality of power transfer coils may be offset from a center of a housing of the charging apparatus.

In some embodiments, a housing of the charging apparatus may be or may resemble a parking bumper.

According to some embodiments, a charging apparatus may be provided, with the charging apparatus configured to transfer energy via inductive coupling to an on-board coil of a vehicle, the charging apparatus comprising: a power transfer coil; a plurality of alignment coils; and a controller, configured to: detect a presence of the vehicle in a proximity of the charging apparatus; detect signals received by each of the plurality of alignment coils; and determine whether the vehicle is aligned or is not aligned relative to the power transfer coil based on the signals received by each of the plurality of alignment coils.

In some embodiments, the controller may be configured to detect the presence of the vehicle in the proximity of the charging apparatus based on a signal received from a component of the vehicle.

In some embodiments, the signal received from the component of the vehicle is a signal acknowledging an identification signal transmitted by the charging apparatus.

In some embodiments, the plurality of alignment coils comprises at least five alignment coils.

In some embodiments, the controller may be configured to determine whether the vehicle is aligned or is not aligned relative to the power transfer coil in a first axis, and the controller may be configured to determine whether the vehicle is aligned or is not aligned relative to the power transfer coil in a second axis.

In some embodiments, the controller may be configured to determine whether the vehicle is aligned or is not aligned relative to the power transfer coil in one or more horizontal axes, and the controller may be configured to determine whether an airgap between the vehicle and the power transfer coil is present in a vertical axis.

In some embodiments, a housing of the charging apparatus may be or may resemble a parking bumper.

In some embodiments, the power transfer coil may be a first power transfer coil of a plurality of power transfer coils, the plurality of alignment coils may be a first plurality of alignment coils of multiple pluralities of alignment coils, each of the plurality of alignment coils may be associated with a respective one of the plurality of power transfer coils, and the controller may be configured to identify an power transfer coil from the plurality of power transfer coils to activate based on a detection of alignment signals by each of the alignment coils of the multiple pluralities of alignment coils.

According to some embodiments, a charging apparatus may be provided, and the charging apparatus may include a power transfer coil configured to transfer energy to a power reception coil of a vehicle via a resonant signal; a data reception coil configured to receive a communication signal from an on-board coil of the vehicle and the resonant signal from the power transfer coil; and a data reception signal processing circuit configured to separate the communication signal from the resonant signal and provide the separated communication signal to a controller.

In some embodiments, the data reception signal processing circuit may include a band-pass filter, an envelope filter, and a low-pass filter.

In some embodiments, the data reception signal processing circuit may be configured to convert the communication signal from an analog signal to a digital signal.

In some embodiments, the controller may be configured to transmit a message to the on-board coil of the vehicle via a signal emission coil.

The inventive concepts provided by the present disclosure have been described above with reference to the accompanying drawings and examples, in which examples of embodiments of the inventive concepts are shown. The inventive concepts provided herein may be embodied in many different forms than those explicitly disclosed herein, and the present disclosure should not be construed as limited to the embodiments set forth herein. Rather, the examples of embodiments disclosed herein are provided so that this disclosure will be thorough and complete, and will fully convey the scope of the inventive concepts to those skilled in the art. Like numbers refer to like elements throughout.

Some of the inventive concepts are described herein with reference to block diagrams and/or flowchart illustrations of methods, apparatus (systems) and/or computer program products, according to embodiments of the inventive concepts. It is understood that one or more blocks of the block diagrams and/or flowchart illustrations, and combinations of blocks in the block diagrams and/or flowchart illustrations, can be implemented by computer program instructions. These computer program instructions may be provided to a processor of a general purpose computer, special purpose computer, and/or other programmable data processing apparatus to produce a machine, such that the instructions, which execute via the processor of the computer and/or other programmable data processing apparatus, create means for implementing the functions/acts specified in the block diagrams and/or flowchart block or blocks. These computer program instructions may also be stored in a computer-readable memory that can direct a computer or other programmable data processing apparatus to function in a particular manner, such that the instructions stored in the computer-readable memory produce an article of manufacture including instructions which implement the function/act specified in the block diagrams and/or flowchart block or blocks. The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions/acts specified in the block diagrams and/or flowchart block or blocks.

Accordingly, the inventive concepts may be embodied in hardware and/or in software (including firmware, resident software, micro-code, etc.). Furthermore, embodiments of the present inventive concepts may take the form of a computer program product on a computer-usable or computer-readable non-transient storage medium having computer-usable or computer-readable program code embodied in the medium for use by or in connection with an instruction execution system.

The computer-usable or computer-readable medium may be, for example but not limited to, an electronic, optical, electromagnetic, infrared, or semiconductor system, apparatus, or device. More specific examples (a non-exhaustive list) of the computer-readable medium would include the following: an electrical connection having one or more wires, a portable computer diskette, a random access memory (RAM), a read-only memory (ROM), an erasable programmable read-only memory (EPROM or Flash memory such as an SD card), an optical fiber, and a portable compact disc read-only memory (CD-ROM).

Well-known functions or constructions may not be described in detail for brevity and/or clarity.

The terms first, second, etc. may be used herein to describe various elements, but these elements should not be limited by these terms. These terms are only used to distinguish one element from another. For example, a first element could be termed a second element, and, similarly, a second element could be termed a first element, without departing from the scope of the present inventive concepts. As used herein, the term "and/or" includes any and all combinations of one or more of the associated listed items. As used herein, the singular forms "a", "an" and "the" are intended to include the plural forms as well, unless the context clearly indicates otherwise. It should be further understood that the terms "comprises," "comprising," "includes," and/or "including" when used herein, specify the presence of stated features, operations, elements, and/or components, but do not preclude the presence or addition of one or more other features, operations, elements, components, and/or groups thereof.

When an element is referred to as being "on" another element, it can be directly on the other element or intervening elements may also be present. In contrast, when an element is referred to as being "directly on" another element, there are no intervening elements present. When an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion *(i.e.,* "between" versus "directly between", "adjacent" versus "directly adjacent", etc.).

Aspects and elements of all of the embodiments disclosed above can be combined in any way and/or combination with aspects or elements of other embodiments to provide a plurality of additional embodiments. Although a few exemplary embodiments of the inventive concepts have been described, those skilled in the art will readily appreciate that many modifications are possible in the exemplary embodiments without materially departing from the novel teachings and advantages of the inventive concepts provided herein. Accordingly, all such modifications are intended to be included within the scope of the present application as defined in the claims.

## Claims

1. A charging apparatus configured to transfer energy via inductive coupling to an on-board power reception coil of a vehicle, the charging apparatus comprising:
a power transfer coil;
a plurality of alignment coils; and
a controller, configured to:
detect a presence of the vehicle in a proximity of the charging apparatus;
detect signals received by each of the plurality of alignment coils; and
determine whether the vehicle is aligned or is not aligned relative to the power transfer coil based on the signals received by each of the plurality of alignment coils.

2. The charging apparatus of claim 1, wherein the controller is configured to detect the presence of the vehicle in the proximity of the charging apparatus based on a signal received from a component of the vehicle.

3. The charging apparatus of claim 2, wherein the signal received from the component of the vehicle is a signal acknowledging an identification signal transmitted by the charging apparatus.

4. The charging apparatus of any preceding claim, wherein the plurality of alignment coils comprises at least five alignment coils.

5. The charging apparatus of any preceding claim, wherein the controller is configured to determine whether the vehicle is aligned or is not aligned relative to the power transfer coil in a first axis and wherein the controller is configured to determine whether the vehicle is aligned or is not aligned relative to the power transfer coil in a second axis.

6. The charging apparatus of any preceding claim, wherein the controller is configured to determine whether the vehicle is aligned or is not aligned relative to the power transfer coil in one or more horizontal axes and wherein the controller is configured to determine whether an airgap between the vehicle and the power transfer coil is present in a vertical axis.

7. The charging apparatus of any preceding claim, wherein the power transfer coil is a first power transfer coil of a plurality of power transfer coils, wherein the controller is configured to identify a power transfer coil from the plurality of power transfer coils to activate and then to activate the identified power transfer coil.

8. The charging apparatus of claim 7, wherein the plurality of alignment coils is a first plurality of alignment coils of multiple pluralities of alignment coils, each of the plurality of alignment coils associated with a respective one of the plurality of power transfer coils, and wherein the controller is configured to identify a power transfer coil from the plurality of power transfer coils to activate based on a detection of alignment signals by each of the alignment coils of the multiple pluralities of alignment coils.

9. The charging apparatus of claim 7 or claim 8, wherein a center of each of the plurality of power transfer coils is offset from a center of a housing of the charging apparatus.

10. The charging apparatus of any preceding claim, further comprising:
a data reception coil configured to receive a communication signal from an on-board data transmission coil of the vehicle and a resonant signal from the power transfer coil; and
a data reception signal processing circuit configured to separate the communication signal from the resonant signal and provide the separated communication signal to a controller.

11. The charging apparatus of claim 10, wherein the data reception signal processing circuit comprises a band-pass filter, an envelope filter, and a low-pass filter.

12. The charging apparatus of claim 10 or claim 11, wherein the data reception signal processing circuit is configured to convert the communication signal from an analog signal to a digital signal.

13. The charging apparatus of any preceding claim, further comprising a signal emission coil, wherein the controller is configured to transmit a message to an on-board data reception coil of the vehicle via the signal emission coil.

14. The charging apparatus of any preceding claim, wherein a housing of the charging apparatus is or resembles a parking bumper.

15. A method comprising:
detecting, by a charging apparatus, a presence of a vehicle in a proximity of the charging apparatus;
detecting, by the charging apparatus, signals received by each of a plurality of alignment coils of the charging apparatus;
determining, by the charging apparatus, whether the vehicle is aligned or is not aligned relative to a power transfer coil of the charging apparatus based on the signals received by each of the plurality of alignment coils; and
transferring energy from the charging apparatus and via inductive coupling to an on-board power reception coil of the vehicle responsive to determining that the vehicle is aligned relative to the power transfer coil.
